Europäisches Patentamt

European Patent Office

Office européen des brevets

(11) Publication number: 0 206 914 B1

# EUROPEAN PATENT SPECIFICATION

(45) Date of publication of patent specification: 16.09.92  (51) Int. Cl.5: **B29C 49/36**, B29C 49/06

(21) Application number: 86401291.9

(22) Date of filing: 13.06.86

(54) Injection stretching blow molding machine.

(30) Priority: 14.06.85 JP 129372/85
03.06.86 JP 128753/86

(43) Date of publication of application:
30.12.86 Bulletin 86/52

(45) Publication of the grant of the patent:
16.09.92 Bulletin 92/38

(84) Designated Contracting States:
CH DE FR GB IT LI SE

(56) References cited:
FR-A- 2 271 023
FR-A- 2 343 586
US-A- 2 331 687
US-A- 3 127 644
US-A- 3 337 667

(73) Proprietor: NISSEI ASB MACHINE CO., LTD.
6100-1, Ohazaminamijo Sakakimachi
Hanishina-gun Nagano-ken(JP)

(72) Inventor: Nakamura, Yoshinori Nissei ASB
Machine Co. Ltd.
6100-1, Ohazaminamijo Sakakimachi
Hanishina-gun Nagano-ken(JP)
Inventor: Koga, Kouhei Nissei ASB Machine
Co. Ltd.
6100-1, Ohazaminamijo Sakakimachi
Hanishina-gun Nagano-ken(JP)

(74) Representative: Martin, Jean-Jacques et al
Cabinet REGIMBEAU 26, Avenue Kléber
F-75116 Paris(FR)

## Description

This invention relates to a molding machine which continuously carries out a series of operations including injection molding of a parison, temperature control, and stretching blow molding of thin-wall containers such as bottles, cups, etc.

An injection stretching blow molding machine is disclosed in the specification of US-A-4 105 391, said machine comprising a base plate disposed above a machine bed, a rotary disk rotatably provided on the undersurface of said base plate, said rotary disk being connected to an intermittently driving device, neck molds mounted on the undersurface of said rotary disk, stop positions of said neck molds making them serve as various operating stages necessary for injection stretching blow molding, various devices disposed on the base plate for said operating stages, and molds arranged between the machine bed and the base plate, in accordance to the preamble of claim I.

This rotary disk is supported by a central rotary shaft connected to a driving device on the base plate and the peripheral edge of the base plate to thereby eliminate the provision of a central column which is essential to the molding machine as disclosed in the specification of US-A-2 331 687.

No obstacle will be present any longer between the machine bed and the base plate thereabove by the omission of the central column, and a space formed thereat may be effectively used as a working space necessary for injection stretching blow molding, as a consequence of which the aforesaid molding machine becomes smaller than a molding machine having a central column, and not only incorporation of various devices necessary for molding becomes easy but all the steps from injection molding of a parison to releasing of a molded product becomes possible to be carried out under one and the same base plate.

With this, management of molding steps becomes easy, the molding cycle time is shortened, and thin-wall containers such as bottles, cups, etc . having uniform wall-thickness distribution may be produced in volume. However, in the aforementioned conventional molding machine, supporting of the base plate is made merely by the peripheral edge because the central column was omitted. If the diameter of the rotary disk is increased to increase the number of neck molds on the undersurface for volume production or if the wall thickness of the base plate in the injection operating stage is increased to effect high pressure clamping, the central portion of the base plate is bended to sometimes impede the horizontal rotation of the rotary disk.

Furthermore, since the mold clamping device provided at right angles to the base plate is arranged so that the injection mold may be positioned under the rotary disk, the mold clamping device cannot be guided by four tie bars, similarly to a conventional injection molding machine, and the position of the tie bars will be set externally of the rotary disk and in addition, the number thereof is restricted merely to opposite sides. Therefore, the guiding the mold clamping device is liable to be unstable, and moreover the clamping force restricted. Besides, many other problems involve.

These problems may be solved by increasing the number of support points for the base plate and of the tie bars. However, in the conventional construction wherein the rotary disk is held on the undersurface of the base plate, the increase of the support points is limited to only the peripheral edge to make it difficult to provide for the support in the central portion which is most effective with respect to the bending resulting from loads, and in addition, leaving no room for the increase of the tie bars.

This invention has been conceived in order to settle the problems noted above with respect to prior art. An object of the present invention is to provide a new injection stretching blow molding machine which makes it possible to support the base plate from both the peripheral edge portion and central portion and which can increase the number of tie bars for carrying out the high pressure mold clamping.

A further object of the present invention is to provide an injection stretching blow molding machine which can arrange molding work operating stages of the same type at opposed positions on the base plate side so that when the rotary disk stops, molding operations may be carried out simultaneously.

Another object of the present invention is to provide an injection stretching blow molding machine for volume production in which a machine bed and a base plate are connected by independent supporting members without having tie bars used for both the clamping device and supporting members for the base plate, the tie bars being exclusively used as connecting members for the mold clamping device, and the mold clamping device may be moved up and down along with the mold clamping device to carry out mold opening and closing, and mold clamping.

For achieving the objects as noted above, according to the present invention, there is provided a molding machine of the above type, characterized in that said rotary disk is annularly formed, the required number of supporting members for supporting and securing said base plate onto the machine bed at the central portion and peripheral portion thereof are provided internally and externally of portions positioned at the injection operating stage and stretching blow operating stage for said rotary disk, said rotary disk comprising an annular rack in the outer periphery or inner periphery thereof, said rack being meshed with a gear of said driving device installed on the side of the base plate, said operating stages being rotated and moved by said gear, in accordance to the characterizing part of claim 1.

According to the construction as described above, since the base plate is supported also at the central portion, bending due to the load does not easily occur. Since the rotary disk horizontally moves between the supporting members, even if the base plate is connected to the machine bed internally and externally of the rotary disk, the movement of the rotary disk is not impaired. Furthermore, even if the diameter of the rotary disk is increased in order to increase the number of molded products taken, the weight of the rotary disk is not increased materially since the central portion is a space, because of which the moving speed of the rotary disk need not be slowed down in consideration of the inertia which acts when the rotation thereof stops.

Moreover, the supporting members for the base plate can be provided independently or along with tie bars for the mold clamping device and blow device. The number of tie bars may be increased to enhance the guiding precision as well as mold clamping precision of the mold clamping disk.

## BRIEF DESCRIPTION OF THE DRAWINGS

The drawings illustrate an injection stretching blow molding machine according to the present invention.

FIG. 1 is a plan view of the machine with a part of the base plate cutaway and with devices on the base plate removed.

FIG. 2 is a longitudinal sectional side view of the injection operating stage of the machine illustrated at Fig. 1.

FIG. 3 is a longitudinal sectional side view of the stretching blow operating stage.

FIG. 4 is a longitudinal sectional side view of a part of the driving portion.

FIGS. 5 to 8 show other embodiments of the machine of present invention. FIG. 5 is a plan view of the machine with the half of the base plate cutaway.

FIG. 6 is a side view thereof.

FIG. 7 is a longitudinal sectional side view of essential parts of the driving portion.

FIG. 8 is a fragmentary bottom view of the rotary disk.

## DETAILED DESCRIPTION OF THE INVENTION

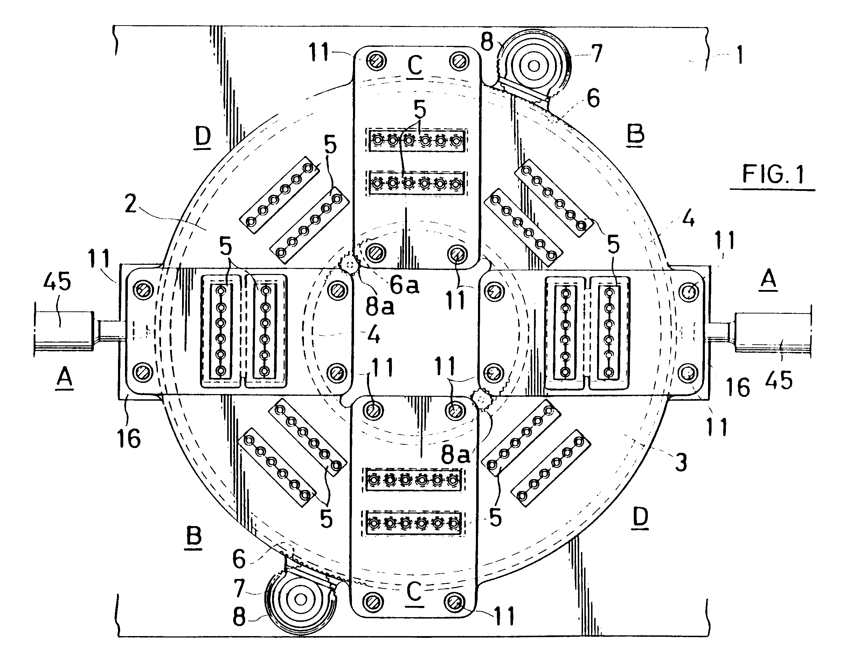

In the figures 1 to 4, reference numeral 1 designates a machine bed, and reference numeral 2 designates a circular base plate horizontally disposed above the machine bed. An annular rotary disk 3 is held and mounted on the undersurface of the base plate 2 by means of members 4, 4 with inner and outer edges thereof secured to the side of the base plate.

Neck molds 5, 5 capable of being opened and closed in a radial direction are mounted at eight places of the undersurface of the rotary disk 3, and a gear 6 for rotation is provided along the outer edge of the rotary disk on the undersurface of the rotary disk externally of the neck molds 5, 5.

The aforesaid gear 6 meshes with a gear 8 of an electrically or hydraulically operated driving device 7 installed at a position opposite the base plate 2, and the driving device 7 is provided with an intermittently moving means, not shown, for rotating the rotary disk 2 every 45°. Sign reference 6a designates a guide gear, which meshes with a gear 8a provided along the inner edge of the rotary disk.

Stop positions of the neck molds 5, 5 are used for an injection operating stage A, a temperature control operating stage B, a stretching blow operating stage C and a taking out operating stage D, respectively, the injection operating stage A and the stretching blow operating stage C having mold clamping devices 9, 10 provided vertically. The mold clamping devices 9, 10 are constructed such that upper fixing members 12, 13 and lower fixing members 14, 15 mounted on the machine bed 1 are connected by means of tie bars 11, 11; the tie bars extend through the base plate 2 internally and externally of the rotary disk 3, and are positioned between a plate member 16 and the base member 2 arranged over the injection operating stages A, A, and support the base plate 2 by supporting members inserted into the tie bars 11, 11.

The tie bars 11, 11 have upper mold clamping plates 18, 19 and lower mold clamping plates 20, 21 inserted therethrough. Connected to the upper mold clamping plate 18 in the injection operating stage A is an injection core 25 which extends through a ram 23 of a mold clamping cylinder 22 provided on the upper fixing member 12, the base plate 2 and the rotary disk 3 and is positioned at a cavity of an injection mold 24 from the neck mold 5.

Connected to the lower mold clamping plate 20 are a ram 27 of a mold clamping cylinder 26 provided on the lower fixing member 14 and a tray 28 of the injection mold 24, the tray 28 internally having a hot runner block 29 which is secured to the lower mold clamping plate 20.

Connected to the upper mold clamping plate 19 in the stretching blow operating stage C are rods 31 of mold clamping cylinders 30 mounted on the upper fixing member 13 and blow cores 33, which extends through the base plate 2 and the rotary disk 3 and are positioned at a cavity of the blow mold 32 from the neck mold 5. Provided on the upper mold clamping plate 19 are a member 35 for moving up and down a stretching rod 34 within each blow core, and an air cylinder 36 and a rod 37 for vertically moving the member 35. Reference numeral 38 designates a supporting block for the blow cores.

Connected to the lower mold clamping plate 21 is a ram 40 of a mold clamping cylinder 39 provided on the lower fixing member, and the blow mold 32 is installed on the plate along an opening and closing device 41.

The aforesaid opening and closing device 41 comprises a pair of fixed plates 42, 42 secured to both sides on the upper surface of the lower mold clamping plate 21, hydraulically operated cylinders 43, 43 provided over both the fixed plates, and rods 44, 44 for opening and closing the blow mold 32 in a radial direction of the base plate 2.

A temperature control core device and a mold opening device, not shown, are provided on the base plate 2 for the temperature control operating stage B and the taking out operating stage D, and a temperature control mold is provided between the machine bed 1 and the base plate 2 for the temperature control operating stage B.

In the molding machine having the construction as described above, injection devices 45, 45 are arranged in the injection operating stages A, A so that parisons 46 may be subjected to injection molding at two places simultaneously. The molded parison 46 is transferred by the rotary disk 3, which rotates and moves along the undersurface of the base plate 2, to the temperature control operating stage B and stretching blow operating stage C while being held by the neck molds 5. A hollow molded product 47 molded at the stretching blow operating stage C is transferred to the taking out operating stage D. Operation of the devices in various operating stages is made in a manner similar to that of the conventional construction and the hollow molded products 47 are taken out at two places every movement of the rotary disk 3.

According to the above-described construction, the rotary disk on the undersurface of the base plate is annularly formed, four tie bars are positioned internally and externally, respectively, of the rotary disk and made to extend through the base plate for the injection operating stage and the stretching blow operating stage, and the mold clamping device is vertically disposed by the tie bars. Therefore, the present configuration is sufficiently withstands the high pressure mold clamping force and possible to carry out the injection molding of parisons which wherein a projected area of a mouth portion is large and the stretching blow molding of containers such as wide-mouth bottles.

Moreover, since the mold clamping device is provided also in the stretching blow operating stage, the high pressure blow molding encountered with a problem in case of the mold opening and closing alone can be accomplished easily, and moreover, since the mold clamping plates in the mold clamping devices, molds and the like may be guided by four tie bars, the mold clamping precision may be further enhanced.

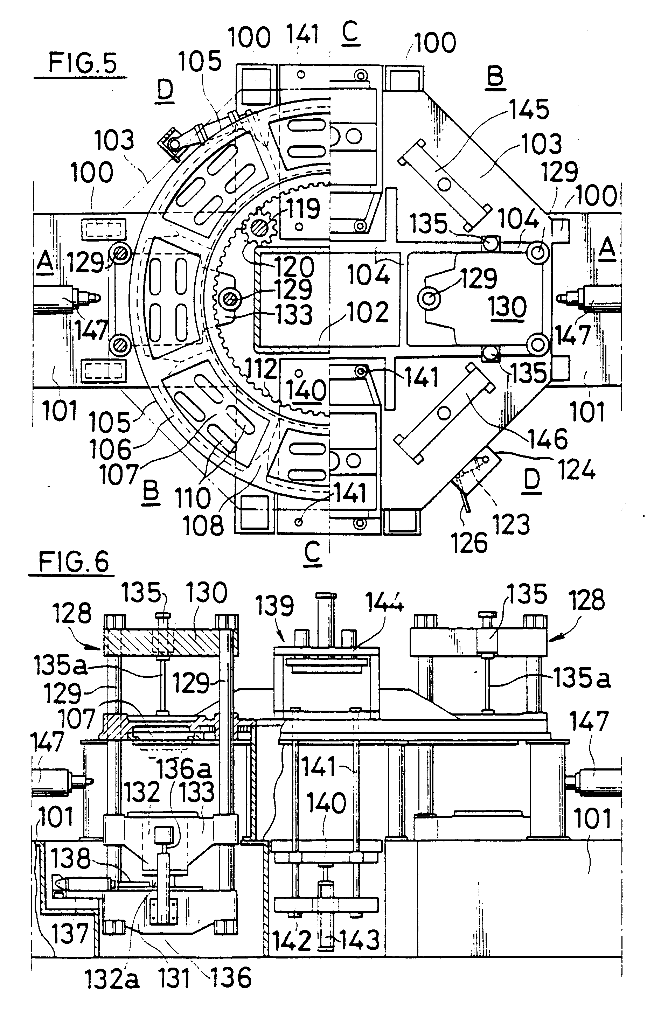

FIGS. 5 to 8 show another embodiment of the present invention, which is different from the aforementioned embodiment shown in FIGS. 1 to 4 in construction of the rotary disk, supporting means and mold clamping device.

In this embodiment, as shown in FIGS. 5 and 6, each pair of prismatic supporting members 100 are arranged on a machine bed 101 for the injection operating stage A and the stretching blow operating stage C, a supporting base 102 in the form of a frame is provided in the central portion of the machine bed 101, and a base plate 103 having its periphery formed into an octagon is supported on and secured to the upper portion of the machine bed 101 by the supporting base 102 and the supporting members 100.

The central portion of the base plate 103 is in the form of a square space portion, and a rib 104 is integrally formed from the periphery of the space portion to the base plate of both the injection operating stage A.

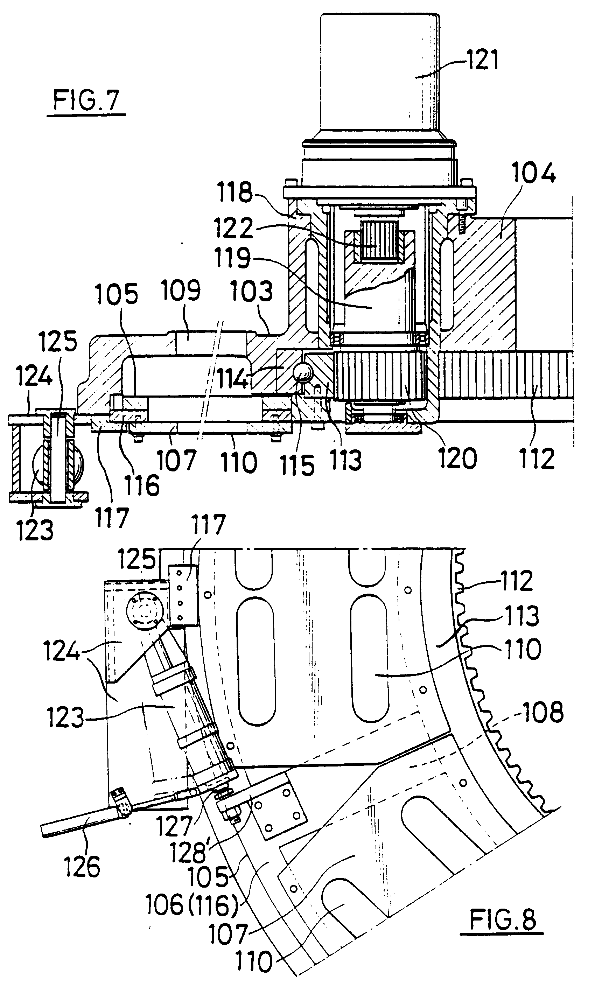

A rotary disk 105 comprises an annular body 106, and eight steel sheets 107 bolted to the lower surface of the annular body 106. The annular body 106 is constructed so that an inner ring and an outer ring are connected by means of arms 108 in predetermined spaced relation so as to reduce the weight, and each steel plate 107 is mounted from the arm 108 to the undersurfaces of the inner and outer rings, as shown in FIG. 8.

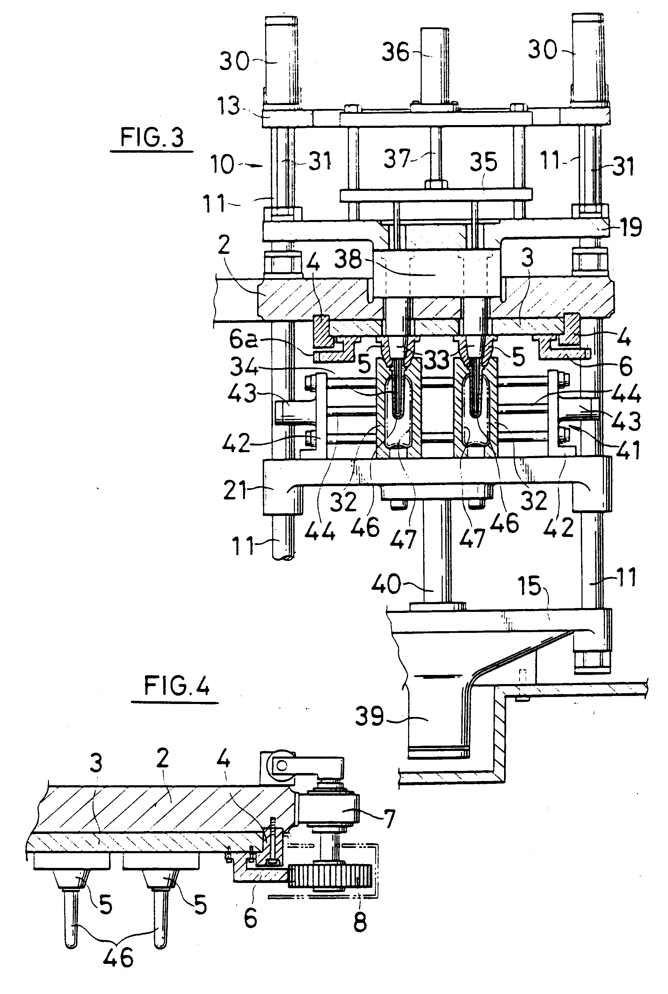

The surface of the steel plates 107 is bored with two rows of slots 110 in a tangential direction, the slots being positioned directly under a core insert hole 109 bored in the base plate 103 (see FIGS. 7 and 8). A plurality of neck molds similar to those shown in FIG. 3 are mounted on the undersurface of the steel plates 107.

An annular rack 113 serving as an internal gear 112 of the rotary disk 105 is mounted on the inner ring of the annular body 106. A ball bearing 115 is provided between the back of the annular rack 113 and an annular guide metal 114 provided on the undersurface of the base plate. The outer ring of the annular body 106 is held on a holder 117 mounted on the undersurface of the peripheral edge of the base plate 103 through a member 116 and adapted to be moved on the uppper surface of the holder 117.

The aforesaid internal gear 112 meshes with a gear 120 provided on a rotary shaft 119 within a supporting sleeve 118 mounted on the base plate 103, the rotary shaft 119 being connected to a driving shaft 122 of an electrically or hydraulically operated driving device 121 mounted on the upper portion of the supporting sleeve 118.

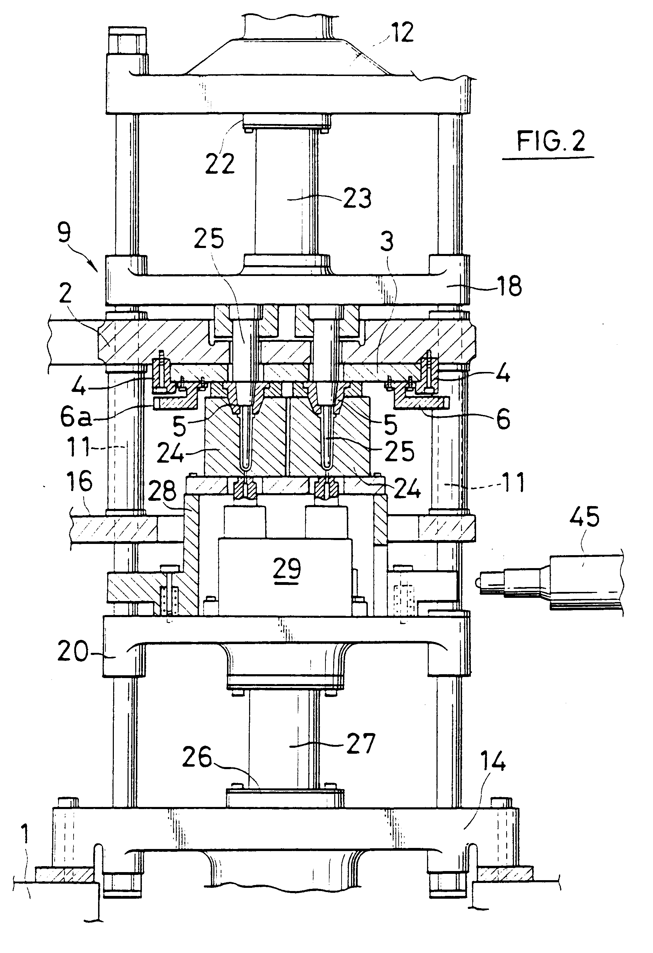

A shock absorber 123 for the rotary disk 105 is rotatably mounted by means of a shaft 125 on a receiving member 124 with a rear end of the cylinder projected from the base plate 103. The shock absorber 123 is swung laterally by means of and external air cylinder 126 connected to the extreme end so that the shock absorber may be fed into the lower side of the annular body 106 when the rotary disk 105 stops and a pressure receiving pin 127 comes into contact with a stop plate 128' projectingly provided on the undersurface of the annular body. It is to be noted that locating between the neck molds and the molds is accomplished by means of a locating pin as in prior art. A mold clamping device as indicated at 128 for the injection operating stage A comprises three tie bars 129 which are inserted movably up and down into the base plate 103 and positioned internally and externally of the rotary disk 105, a connecting plate 131 for an upper mold clamping plate 130 and a lower end of tie bars, the connecting plate 131 being mounted over the upper ends of the tie bars 129, and a lower mold clamping plate 133 integral with a mold clamping cylinder 132 provided movably up and down on the connecting plate 131. The neck molds and mold closing injection molds are provided on the upper surface of the lower mold clamping plate 123 in a manner similar to that of FIG. 2, and cores which extend through the neck molds and are positioned within the injection molds are mounted on the undersurface of the upper mold clamping plate 130.

The upper mold clamping plate 130 and the base plate 103 are connected by means of hydraulic cylinders 135 positioned on both sides of the mold clamping plate, and the connecting plate 131 and the lower mold clamping plate 133 are connected by means of hydraulic cylinders positioned on both sides thereof.

Opening and closing of the mold clamping device 128 is carried out by supplying pressure oil to the upper hydraulic cylinder 135. When pressure oil is supplied to the lower chamber of the upper hydraulic cylinder 135, though a hydraulic passage in each hydraulic cylinder is not shown, the upper mold clamping plate 135 is moved from the position shown in FIG. 6 downwardly along with the tie bars 129 in view of the fact that a piston rod 135a is connected to the base plate 103. Thereby, the connecting plate 131 at the lower end of the tie bar is also moved downward but pressure oil discharged from the upper chamber of the upper hydraulic cylinder 135 moves into the lower chamber of the lower hydraulic cylinder 136 and the piston rod 136a connected to the lower mold clamping plate 135 is moved upwards to raise the lower mold clamping plate 135. At that time, pressure oil is supplied into the mold clamping cylinder, and the lower end of a mold clamping ram 132a is slipped out of the connecting plate 136 to complete mold closing. When the returning of the mold clamping ram 132a is impeded by the plugging-in of a plate 138 connected to a shut-off cylinder 137 on the connecting plate 131, powerful mold clamping is to be carried out by the pressure oil within the mold clamping cylinder.

Mold opening can be done by returning the plate 138 to its original position, and thereafter supplying the pressure oil to the upper chamber of the upper hydraulic cylinder 135, whereby the pressure oil within the lower chamber flows into the upper chambner of the lower hydraulic cylinder 136 to pull the lower mold clamping plate 133 back onto the connecting plate. Of course, at that time, the upper mold clamping plate 135 and the connecting plate 131 also move upward together with the tie bars 129. The above-described opening and closing operation is effected by operation of a few valves provided inthe hydraulic circuit. Accordingly, the mold clamping device 128 as described provides for the effect for molding a flat parison wherein a mold opening dimension is small.

Reference numeral 139 designates a stretching blowing device for the stretching blow operating stage C. A mold place plate 140 is inserted into four tie bars 141 hung up internally and externally of the rotary disk 105 from the base plate 103 and is moved up and down by means of a hydraulic cylinder 143 provided on a connecting plate 142 at the lower end of the tie bars 141.

Reference number 144 designates a device installed on the base plate 103 for elevating the stretching rod and blowing air, 145 a temperature control device provided on the base plate for the temperature control operating stage B, 146 a mold releasing device provided on the base plate for the mold releasing operating stage D, and 147 injection devices

According to the embodiment constructed as described above, the base plate may be installed above the machine bed without making the tie bars serve as the supporting members whereby the precision of the mold clamping device and of the stretching blow device may be enhanced and at the same time the mechanical strength may be increased.

Furthermore, since the rotary disk is composed of the annular body comprising ribs alone and the required number of steel plates, the weight of the machine can be reduced even if the rotary disk increases its diameter, and not only the inertia when rotation and stopping take place may be minimized but being. economical. The present invention has many advantages as noted above.

## Claims

1. An injection stretching blow molding machine comprising a base plate (2) disposed above a machine bed (1), a rotary disk (3) rotatably provided on the undersurface of said base plate, said rotary disk being connected to an intermittently driving device (7), neck molds (5) mounted on the undersurface of said rotary disk, stop positions of said neck molds making them serve as various operating stages necessary for injection stretching blow molding, various devices disposed on the base plate for said operating stages, and molds (24) arranged between the machine bed (1) and the base plate (2), characterized in that said rotary disk (3) is annularly formed, the required number of supporting members (11, 12, 13, 14, 15) for supporting and securing said base plate (2) onto the machine bed (1) at the central portion and peripheral portion thereof are provided internally and externally of portions positioned at the injection operating stage (A) and stretching blow operating stage (C) for said rotary disk, said rotary disk (3) comprising an annular rack (6) in the outer periphery or inner periphery thereof, said rack being meshed with a gear (8) of said driving device (7) installed on the side of the base plate (2), said operating stages being rotated and moved by said gear.

2. The injection stretching blow molding machine as set forth in claim 1, wherein supporting members for said base plate comprise tie bars (11) disposed in each pair internally and externally of the rotary disk (3), said tie bars also serving as members for supporting mold clamping devices (9, 10) for the injection operating stage (A) and the stretching blow operating stage (C) vertically with respect to said rotary disk (3) and guiding the same.

3. The injection stretching blow molding machine as set forth in claim 1, wherein said rotary disk (105) comprises an annular body (106) formed of cast iron, and the required number of steel plates (107) mounted on the undersurface of said annular body, said annular body (106) comprising a frame construction, wherein inner ring and outer ring are connected by means of arms (108) in a predetermined spaced relation, said inner ring being provided with an annular rack (113), said steel plates (107) being mounted over and between said arms (108) and the undersurfaces of the inner and outer rings, said steel plates (107) having their surface bored with the required number of slots (110) in a tangential direction positioned directly under core insert holes (109) bored in said base plate (103), and neck molds are mounted on the undersurface of said steel plates (107).

4. The injection stretching blow molding machine as set forth in claim 1, wherein the supporting members for the base plate (103) comprises prismatic members (100) disposed in each pair externally of the rotary disk (105) and a frame-like supporting base (102) disposed on the machine bed (101) in the central portion of said base plate (103), and the tie bars (129) for the mold clamping device (128) are extended movably up and down internally and externally of the rotary disk (105) for the injection molding operating stage (A).

5. The injection stretching blow molding machine as set forth in claim 1, wherein said base plate (103) has a shock absorber (123) for the rotary disk (105), said shock absorber comprising a cylinder having a rear end rotatably mounted on the base plate (103), a swinging air cylinder (126) connected externally of the extreme and of the first-mentioned cylinder, and a stop plate (128') projectingly provided on the lower side of the rotary disk (105) so as to come into contact with a pressure receiving pin (127) at the end of the cylinder.

6. The injection stretching blow molding machine as set forth in claim 1, wherein said operating stages are designed so that two sets (A, C) of the same operating stages are provided on the machine bed so as to be opposed to each other.

## Patentansprüche

1. Spritzstreckblasformmaschine mit einer oberhalb eines Maschinenbettes (1) angeordneten Grundplatte (2), einer drehbar an der Unterseite der Grundplatte angeordneten Drehscheibe (3), welche an eine intermittierend arbeitende Antriebsvorrichtung (7) angeschlossen ist, Halsformen (5), welche an der Unterseite der Drehscheibe angeordnet sind, wobei in Stop-Positionen an den Halsformen verschiedene Arbeitsstufen, die zum Spritzstreckblasformen erforderlich sind, verschiedenen an der Grundplatte angeordneten Vorrichtungen für diese Arbeitsstufen und zwischen dem Maschinenbett (1) und der Grundplatte (2) angeordneten Formen (24), dadurch **gekennzeichnet**, daß die Drehscheibe (3) ringförmig ist, daß die erforderliche Anzahl von Stützgliedern (11,12,13,14,15) zum Unterstützen und Sichern der Grundplatte (2) am Maschinenbett (1) an dessen mittleren Bereich und Umfangsbereich innerhalb und außerhalb von Abschnitten angeordnet sind, die in der Spritzarbeitsstufe (A) und in der Streckblasarbeitsstufe (C) der Drehscheibe positioniert sind, daß die Drehscheibe (3) einen Zahnkranz (6) am äußeren oder inneren Umfang aufweist, daß der Zahnkranz mit einem Ritzel (8) der Antriebsvorrichtung (7) kämmt, welche seitlich der Grundplatte (2) installiert ist und daß die Arbeitsstufen durch das Ritzel angefahren werden.

2. Spritzstreckblasformmaschine nach Anspruch 1, bei der die Stützglieder für die Grundplatte Zugstangen (11) aufweisen, welche paarweise innerhalb und außerhalb der Drehscheibe (3) angeordnet sind und als Mittel zum Unterstützen von Formklemmvorrichtungen (9, 10) für die Spritzarbeitsstufe (A) und die Streckblasarbeitsstufe (C) vertikal bezüglich der Drehscheibe (3) und zu deren Führung dienen.

3. Spritzstreckblasformmaschine nach Anspruch 1, bei der die Drehscheibe (105) einen Ringkörper (106) aus Gußeisen mit in erforderlicher Anzahl an dessen Unterseite angebrachten Stahlplatten (107) aufweist, der Ringkörper (106) eine Rahmenkonstruktion aufweist, bei der ein innerer Ring und ein äußerer Ring mittels Armen (108) in vorbestimmten Abständen verbunden sind, der innere Ring einen Zahnkranz (113) aufweist, die Stahlplatten (107) auf den und zwischen den Armen (108) und den Unterseiten der inneren und äußeren Ringe angebracht sind, die Stahlplatten (107) in erforderlicher Anzahl von tangential verlaufenden Schlitzen (110) direkt unterhalb von Kerneinsatzlöchern (109) der Grundplatte (103) durchsetzt sind und Halsformen an der Unterseite der Stahlplatten (107) angebracht sind.

4. Spritzstreckblasformmaschine nach Anspruch 1, bei der die Stützglieder für die Grundplatte (103) prismatische Glieder (100) aufweisen, die paarweise außerhalb der Drehscheibe (105) angeordnet sind, sowie eine rahmenartige Stützbasis (102), die im mittleren Bereich der Grundplatte (103) auf dem Maschinenbett (101) angeordnet ist, und daß Zugstangen (129) innerhalb und außerhalb der Drehscheibe (105) zum Auf- und Abbewegen der Formklemmvorrichtung (128) für die Spritzformarbeitsstufe (A) vorgesehen sind.

5. Spritzstreckblasformmaschine nach Anspruch 1, bei der die Grundplatte (103) einen Stoßdämpfer (123) für die Drehscheibe (105) aufweist, der Stoßdämpfer einen Zylinder hat, dessen rückwärtiges Ende an der Grundplatte (103) angeordnet ist, ein schwenkbarer Luftzylinder (126) an das extreme Ende des erstgenannten Zylinders angeschlossen ist, und daß eine Anschlagplatte (128') von der Unterseite der Drehscheibe (105) so wegragt, daß sie in Berührung mit einem Druck aufnehmenden Stift (127) am Ende des Zylinders kommt.

6. Spritzstreckblasformmaschine nach Anspruch 1, bei der die Arbeitspositionen so angeordnet sind, daß zwei Sätze (A,C) gleicher Arbeitsstufen am Maschinenbett einander gegenüber durchführbar sind.

**Revendications**

1. Une machine de moulage par injection-étirage-soufflage comprenant un plateau de base (2) disposé au-dessus d'un banc (1) de la machine, un disque rotatif (3) monté de façon tournante sur la surface inférieure dudit plateau de base, ce disque rotatif étant relié à un dispositif (7) d'entraînement par intermittence, des moules de col (5) montés sur la surface inférieure dudit disque rotatif, des positions d'arrêt desdits moules de col leur permettant de servir de différents étages opératoires nécessaires pour un moulage par injection-étirage-soufflage, différents dispositifs montés sur le plateau de base pour lesdits étages opératoires, et des moules (24) disposés entre le banc (1) de la machine et le plateau de base (2), caractérisée en ce que ledit disque rotatif (3) est pourvu d'une forme annulaire, des éléments porteurs en nombre nécessaire (11, 12, 13, 14, 15) pour supporter et fixer ledit plateau de base (2) sur le banc (1) de la machine à sa partie centrale et à sa partie périphérique sont disposés à l'intérieur et à l'extérieur de parties positionnées dans l'étage opératoire d'injection (A) et dans l'étage opératoire de soufflage-étirage (C) pour ledit disque rotatif, ce disque rotatif (3) comprenant une crémaillère annulaire (6) sur sa périphérie extérieure ou sur sa périphérie intérieure, ladite crémaillère étant en prise avec un pignon (8) dudit dispositif d'entraînement (7) qui est installé sur le côté dudit plateau de base (2), lesdits étages opératoires étant entraînés en rotation et déplacés par ledit pignon.

2. La machine de moulage par injection-étirage-soufflage telle que définie dans la revendication 1, dans laquelle des éléments porteurs pour ledit plateau de base comprennent des tirants (11) disposés, pour chaque paire, à l'intérieur et à l'extérieur du disque rotatif (3), lesdits tirants servant également d'éléments pour supporter des dispositifs de blocage de moules (9, 10) pour l'étage opératoire d'injection (A) et l'étage opératoire de soufflage-étirage (C), verticalement par rapport audit disque rotatif (3) et pour assurer son guidage.

3. La machine de moulage par injection-étirage-soufflage telle que définie dans la revendication 1, dans laquelle ledit disque rotatif (105) comprend un corps annulaire (106) réalisé en fonte, ainsi que le nombre nécessaire de plaques d'acier (107) montées sur la surface inférieure dudit corps annulaire, ledit corps annulaire (106) ayant une structure de châssis, où un anneau intérieur et un anneau extérieur sont reliés au moyen de bras (108) dans une relation d'espacement prédéterminé, ledit anneau intérieur étant pourvu d'une crémaillère annulaire (113), lesdites plaques d'acier (107) étant montées sur et entre lesdits bras (108) et les surfaces inférieures des anneaux intérieur et extérieur, lesdites plaques d'acier (107) étant pourvues par perçage de leurs surfaces du nombre nécessaire de fentes (110) orientées tangentiellement et positionnées directement en-dessous de trous d'insertion de noyaux (109), percés dans ledit plateau de base (103), et des moules de col sont montés sur la surface inférieure desdites plaques d'acier (107).

4. La machine de moulage par injection-étirage-soufflage telle que définie dans la revendication 1, dans laquelle les éléments porteurs pour le plateau de base (103) comprennent des éléments prismatiques (100) disposés, pour chaque paire, à l'extérieur du disque rotatif (105) et une base porteuse (102) en forme de châssis, disposée sur le banc (101) de la machine dans la partie centrale dudit plateau de base (103), et les tirants (129) pour le dispositif de blocage de moules (128) sont disposés de façon à se déplacer vers le haut et vers le bas à l'intérieur et à l'extérieur du disque rotatif (105) pour l'étage opératoire (A) de moulage par injection.

5. La machine de moulage par injection-étirage-soufflage telle que définie dans la revendication 1, dans laquelle ledit plateau de base (103) comporte un amortisseur de chocs (123) pour le disque rotatif (105), ledit amortisseur de chocs comprenant un cylindre pourvu d'une extrémité arrière montée de façon tournante sur le plateau de base (103), un vérin pneumatique de pivotement (126) relié à la partie extérieure du cylindre mentionné en premier, et une plaque d'arrêt (128') faisant saillie du côté inférieur du disque rotatif (105) de façon à entrer en contact avec une broche (127) de réception de pression qui est prévue à l'extrémité du cylindre.

6. La machine de moulage par injection-étirage-soufflage telle que définie dans la revendication 1, dans laquelle lesdits étages opératoires sont conçus de telle sorte que deux groupes (A, C) des mêmes étages opératoires soient installés sur le banc de la machine de façon à être mutuellement en opposition.

FIG.1

FIG.2

FIG.3

FIG.4

FIG.5

FIG.6

FIG.7

FIG.8